# EUROPEAN PATENT SPECIFICATION

(11) **EP 1 459 621 B1**
(45) Date of publication and mention of the grant of the patent: **05.09.2007**
(21) Application number: 04075414.5
(22) Date of filing: 09.02.2004
(51) Int. Cl.: A01G 9/22

(54) **Glasshouse or greenhouse with screen installation**
Glashaus oder Gewächshaus mit Schirmanlage
Abri vitré ou serre avec dispositif de store

(30) Priority: 11.02.2003 NL 1022641
(43) Date of publication of application: 22.09.2004
(73) Proprietor: Steetec Installatie B.V., 2675 BR Honselerdijk (NL)
(72) Inventor: Bom, Petrus Leonardus Jozef, 2970 's-Gravenwezel (BE); Van Steekelenburg, Paulus Wilhelmus Jozef, 2671 HT Naaldwijk (NL)
(74) Representative: van Westenbrugge, Andries

(56) References cited:
- EP-A- 0 920 800
- NL-A- 9 400 921
- NL-C- 1 012 518

## Description

The invention relates to a glasshouse or greenhouse, comprising a framework composed of columns, parallel trusses which are supported by the columns, caps which are each supported between two gutters extending transversely across the trusses, and a screen installation, which screen installation comprises screen profiled sections, screen cloths, which are each secured at one end to a truss and at the other end to a screen profiled section, slip elements and drive members, which drive members are secured, by means of a slip element, to a screen profiled section for moving the screen cloths between a closed position, in which the space between each pair of trusses is closed off, and an open position, which slip elements each comprise a spring member for causing each slip element to engage under spring pre-stress on the associated drive member in order to create a predetermined slip force between slip element and drive member.

A glasshouse of this type is known from NL-A 9400921. When the screen cloths are being moved between the closed position and the open position, the drive members exert a certain driving force on the screen profiled sections. However, this force is limited by the slip elements. This is because as soon as the driving force exceeds a defined threshold value, the drive member starts to slip with respect to the screen profiled sections. This threshold value or slip force depends on the spring pre-stress which is exerted by the spring member. In the known glasshouse, the slip elements can be placed under a greater or lesser spring pre-stress, resulting in a correspondingly greater or lesser slip force with respect to the drive members.

The purpose of these slip elements is to close all the screens, even if the compartment dimensions between the trusses differ slightly. These differences may arise, for example, as a result of construction inaccuracy. As soon as the screens which are located in compartments with relatively small dimensions are closed, the drive members in the associated slip couplings start to slip. As a result, the drive members can continue to move, such that it is also possible to close the screens in relatively large compartments.

Nevertheless, despite these slip couplings, openings may still occur. These openings may form as a result of temperature fluctuations. For example, in the morning, as the glasshouse roof warms up under the influence of solar radiation, expansion may occur, such that the compartments become slightly larger. However, the screen profiled sections are fixed in their original closed position by the drive members. Consequently, the trusses may to some extent come free of the screen profiled sections, resulting in the formation of gaps. This is undesirable since the formation of gaps makes it difficult to maintain a predetermined, desired climate in the cultivation space beneath the screens.

Therefore, it is an object of the invention to provide a glasshouse which does not have this drawback. This object is achieved by virtue of the fact that at least one screen profiled section is displaceable with respect to the slip elements in the longitudinal direction of the drive members, that a pre-stressing means is provided for biasing the screen profiled section into a predetermined position with respect to the slip elements, and that the pre-stressing means provides a pre-stressing force which is lower than the slip force.

In the glasshouse according to the invention, the screen profiled sections, in the closed position, can be kept pressed against the associated truss under pre-stress. This is achieved by allowing the drive members to continue to move until the slip couplings start to slip after the screen profiled section has come to bear against the truss. On account of the fact that the pre-stressing force of the pre-stressing means is lower than the slip force of the slip element, it is ensured that if slippage of the slip element is observed, the pre-stressing members are fully depressed. If, in this state, the compartments increase in size slightly as a result of heating, the screen profiled sections can follow the expansion movement of the associated truss by virtue of the fact that they are driven by the relaxation of the pre-stressing means. The advantage of this is that the seal between screen profiled section and truss is retained. For this purpose, the screen profiled section is pre-stressed towards the truss against which the said screen profiled section bears in its closed position.

The advantage of this improvement, as has been mentioned, is that the closed position of the screen can be maintained even if the glasshouse structure is subject to expansion phenomena. This may arise, for example, if the space between the screen and the roof heats up, for example when the sun is rising. As a result, the compartments expand slightly. As a result, in traditional screen installations a gap is formed between the screen profiled section and the truss against which the screen profiled section was originally bearing in such a manner as to form a closure. If the slide means of the screen profiled sections, during the preceding closing movement, were depressed counter to the pre-stressing force, the screen profiled section can follow the expansion movement of the compartment and continues to bear against the truss so as to form a closure. The pre-stressing force in the process decreases slightly, but can be adapted to the expected expansions in such a way that the formation of gaps can be avoided.

To allow further construction inaccuracies to be absorbed, the screen profiled section is connected to a slip element in such a manner that it can rotate about an axis running transversely to the said screen profiled section and the drive members.

The pre-stressing means may be designed in various ways. According to a first, preferred embodiment, the pre-stressing means comprises at least one leaf spring, and in particular a set of at least two leaf springs.

The screen profiled section is preferably connected to the slip elements via in each case one slide means. This slide means may comprise a housing, which is fixedly connected to the screen profiled section or the slip element, and a slide, which is connected to the other component out of the screen profiled section and the slip element, which housing has a space in which the slide can slide.

The housing may have two bearing supports which are located on either side of the slide, between which bearing supports and slide there is at least one pre-stressed leaf spring. In a particular embodiment, the slide may be able to rotate with respect to the housing about an axis running transversely to the screen profiled section. The drive member may have a supporting surface which is at least partially cylindrical with respect to this axis, the bearing supports of the housing being located on either side of the said axis, in such a manner that the supporting surface bears under pre-stress against the leaf spring, and in the event of rotation of the slide with respect to the housing the at least partially cylindrical supporting surface sliding along the leaf spring.

The spring pre-stress of the leaf springs may in this case always be ensured independently of the rotated position of the screen profiled section with respect to the drive member.

According to an alternative embodiment, the pre-stressing member may comprise at least one coil spring which extends between the slide and the housing.

The invention will be explained in more detail with reference to the following figures:
Figure 1 shows a perspective view of part of a glasshouse with a screen installation according to the invention.
Figure 2 shows a side view in cross-section corresponding to view II-II in Figure 1.
Figure 3 shows a plan view corresponding to III-III in Figure 2.
Figure 4 shows a side view in cross-section of a second embodiment corresponding to cross-section IV-IV in Figure 2.
Figure 5 shows a side view in cross-section of a second embodiment.
Figure 6 shows a cross-section corresponding to VI-VI in Figure 5.

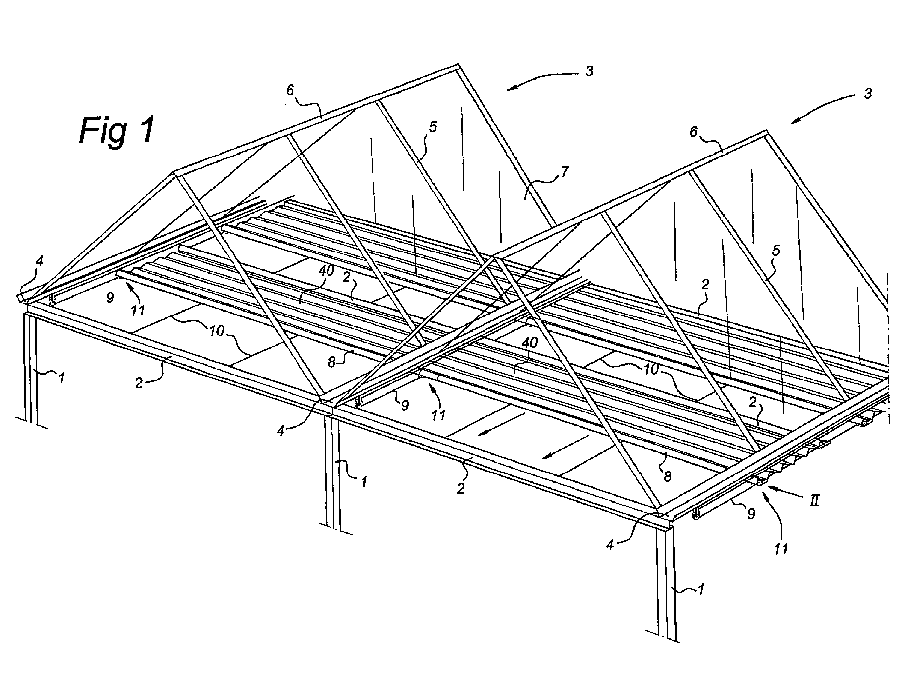

The glasshouse which is shown in Figure 1 comprises, in a known way, a framework made up of columns 1, parallel trusses 2 which are supported by the columns, gutters 4 which extend transversely over the trusses 2, and caps 3 which are each supported on two gutters 4. In a known way, these caps 4 have rails 5 which each extend between a ridge 6 and a gutter 4. Light-transmitting panels 7 are located between in each case two rails 5, a gutter 4 and a ridge 6.

Furthermore, it is known to arrange a screen installation in a glasshouse of this type, making it possible to screen the space beneath the gutters with regard to incidence of light, cold and the like. This screen installation comprises screen profiled sections 8 which can be moved to and fro between each pair of trusses 2 by drive cables 9. A screen cloth 40 is arranged between each screen profiled section 8 and a truss 2. The screen cloths 40 are supported by bearing cables 10. Driving the screen profiled sections 8 in a suitable way allows these screen cloths 40 to be transferred between a closed position, in which the space between each pair of trusses 2 is closed off from the incidence of light and the like, and an open position, in which the screen cloth has been folded up to form a small package between a truss 2 and the screen profiled section 8 which has been forced against the latter.

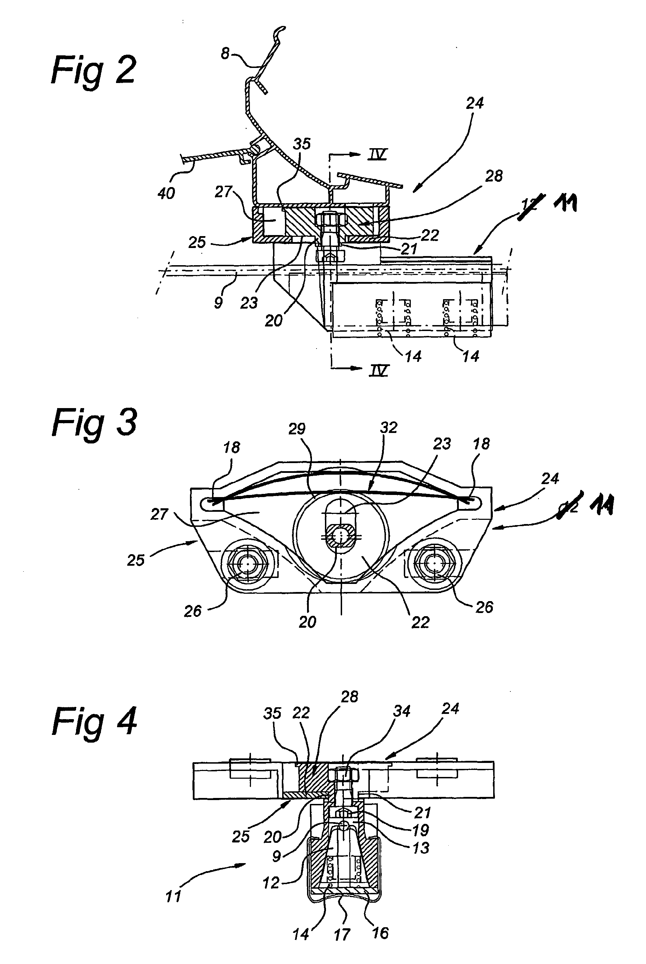

With a view to ensuring the fully open and closed positions of all the screen cloths 9, the screen profiled sections 8 are secured to the drive cables 9 by means of what are known as slip couplings 11. The side view shown in Figure 2 illustrates a screen profiled section 8, slip coupling 11 and drive cable 9 of this type. For the sake of clarity, the screen cloth 40 is indicated by dashed lines. The slip coupling 11 comprises two slip parts 12, 13, which are held pressed against one another under spring pre-stress by means of two coil springs 14. One of the slip parts 13 is fixed, while the other slip part 12 can move freely.

As shown in Figure 4, the slip parts 12, 13 are of a corresponding conical shape. On the wide, open side the slip part 13 is closed off by a closure plate 16, which is held resiliently against the fixed slip part 13 by the sheet-metal clamp 17. The drive member, which is designed as cable 9, is therefore clamped between the slip parts 12, 13 under pre-stress.

The cylindrical slide, which is denoted overall by 28, is secured to the fixed slip part 13 by means of the bolt 19 and the nut 34. The head of the bolt 19 is retained in the fixed slip part 13, and the nut is retained in the slide 28. The head has a non-round pin 20, which is retained non-rotatably in the likewise non-round recess 21 in the fixed slip part 13. The height of this non-round pin 20 is selected in such a manner that the housing 25 can slide with respect to the slip coupling 11 by virtue of the slotted hole 23 in the base 22 of the housing 25. This housing 25 is connected to the screen profiled section 9 by means of the nut/bolt connections 26, cf. Figure 2.

As can be seen in the plan view presented in Figure 3, the housing 25 has an internal space 27 which extends transversely with respect to the longitudinal direction of the cable 9 and is provided with two supporting surfaces 28 for the set of leaf springs 29. Furthermore, this set of leaf springs 29 rests against the cylindrical surface of the slide 28. As a result, the housing 25 is subject to a permanent pre-stress in the direction towards the opposite truss (not shown).

As soon as the screen profiled section 8, in particular its sealing lip 30, comes into contact with the truss, the housing 25 is held in place. The cylindrical slide 28 then presses the set of leaf springs 29 into the curved position shown in Figure 3, until the limit position is reached. Then, the slip element 11 comes into effect when the slip force is exceeded.

In this state, therefore, the screen profiled section 9 is pressed against the associated truss under spring pre-stress. As soon as the compartment size increases slightly as a result of expansion differences, for example, and the truss starts to move, the screen profiled section 8 is biased so as to follow this movement on the part of the truss 2, with the set of leaf springs 29 relaxing. This ensures that the sealing action of the lip 30 with respect to the opposite truss 2 is maintained even if expansion differences occur, for example as a result of temperature fluctuations.

Furthermore, it should be noted that the housing 25, and therefore the screen profiled section 8, can rotate with respect to the slip element 11. For this purpose, the pin 20 is rounded, in such a manner that the base 23 of the housing 25 can rotate about this pin 20. During this rotary movement, the contact point of the leaf spring 29 slides in a corresponding way over the cylindrical outer surface of the slide 18. This ensures that a constant, desired pre-stress can be maintained in any rotational position of the housing 25 with respect to the slip element 11.

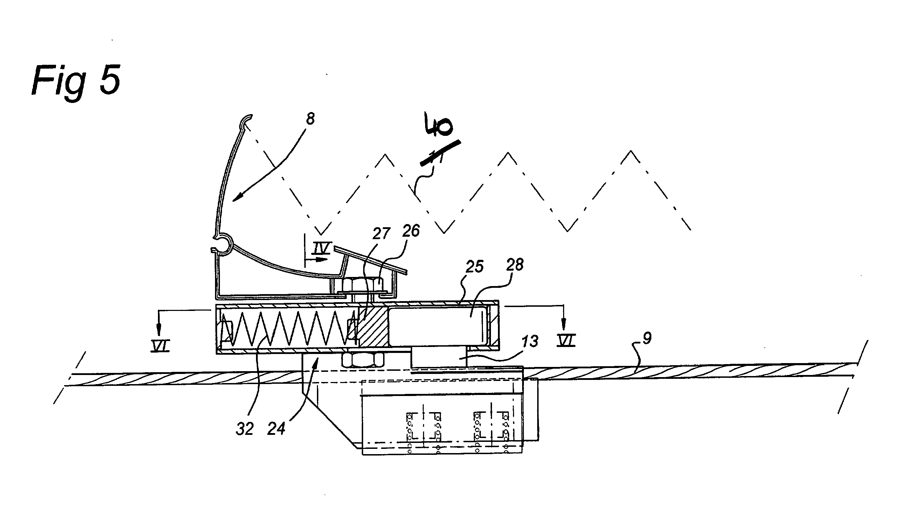

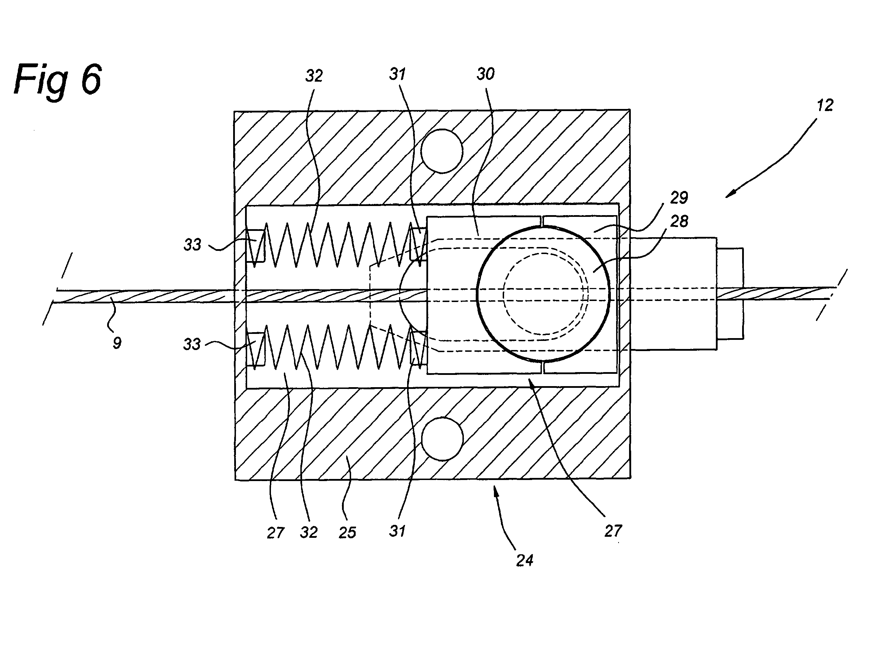

In the embodiment shown in Figures 5 and 6, the slide means 24 has a slide element 27, to which the slide or head 28 of the pin is secured in such a manner that it can rotate about its own axis. For this purpose, the slide element 27 comprises two parts 29, 30, which can be pulled onto one another with a certain clamping force or held pressed against one another by the coil spring 32 (cf. below).

The part 30 of the slide element 27 has two projections 31, on which are arranged the end of the two coil springs 32, the other end of which is arranged around the projections 33. These projections 33 are to be found in one end of the internal space 27 in the housing 25.

The slide means 24 operates in the following way. When a screen profiled section 8 has been slid onto an opposite truss 2, in such a manner that the space between two trusses is completely closed off by means of the screen cloth in the closed position, the springs 32 are still depressed slightly. This is because the slip force of the slip element 11 is selected to be higher than the pre-stressing force of the spring 32. As soon as the size of the compartment between two trusses 2 starts to increase, for example as a result of the cap warming up, the screen profiled section 8 can follow this expansion movement as a result of the spring 32 relaxing slightly. This ensures that the closing action of the screen cloths 40 can be maintained.

## Claims

1. Glasshouse or greenhouse, comprising a framework composed of columns (1), parallel trusses (2) which are supported by the columns (1), caps (3) which are each supported between two gutters (4) extending transversely across the trusses (2), and a screen installation, which screen installation comprises screen profiled sections (8), screen cloths (40), which are each secured at one end to a truss (2) and at the other end to a screen profiled section (8), slip elements (11) and drive members (9), which drive members (9) are secured, by means of a slip element (11), to a screen profiled section (8) for moving the screen cloths (40) between a closed position, in which the space between each pair of trusses (2) is closed off, and an open position, which slip elements (11) each comprise a spring member (14) for causing each slip element (11) to engage under spring pre-stress on the associated drive member (9) in order to create a predetermined slip force between slip element (11) and drive member (9), **characterized in that** at least one screen profiled section (8) is displaceable with respect to the slip elements (11) in the longitudinal direction of the drive members (9), **in that** a pre-stressing means (32) is provided for biasing the screen profiled section (8) into a predetermined position with respect to the slip elements (11), and **in that** the pre-stressing means (32) provides a pre-stressing force which is lower than the slip force.

2. Glasshouse according to Claim 1, in which the screen profiled section (8) is pre-stressed in the direction of the truss (2) against which the said screen profiled section (8) bears in the closed position of the associated screen cloth (40).

3. Glasshouse according to Claim 1 or 2, in which the screen profiled section (8) is connected to a slip element (11) such that it can rotate about an axis running transversely to the said screen profiled section (8) and the drive members (9).

4. Glasshouse according to one of the preceding claims in which the pre-stressing means (32) comprises at least one leaf spring (29).

5. Glasshouse according to Claim 4, in which the pre-stressing means (32) comprises a set of at least two leaf springs (29).

6. Glasshouse according to one of the preceding claims, in which the screen profiled section (8) is connected to the slip elements (11) via at least one slide means (24).

7. Glasshouse according to Claim 6, in which the slide means (24) comprises a housing (25), which is fixedly connected to the screen profiled section (8) or the slip element (11), and a slide (28), which is connected to the other component out of the screen profiled section (8) and the slip element (11), which housing (25) has a space (34) in which the slide (28) can slide.

8. Glasshouse according to Claim 7, in which the housing has two bearing supports (18) which are located on either side of the slide (28), between which bearing supports (18) and slide (28) there is at least one pre-stressed leaf spring (29).

9. Glasshouse according to Claim 8, in which the slide (28) can rotate with respect to the housing (25) about an axis running transversely to the screen profiled section (8) and the drive member (9) and has a supporting surface which is at least partially cylindrical with respect to this axis, and the bearing supports (18) of the housing (25) are located on either side of the said axis, in such a manner that the supporting surface bears under pre-stress against the leaf spring (29), and in the event of rotation of the slide with respect to the housing the at least partially cylindrical supporting surface slides along the leaf spring (19).

10. Glasshouse according to Claim 9, in which the at least partially cylindrical supporting surface is delimited by a flanged edge (35), in such a manner that the leaf spring (29) is retained between the said flanged edge (35) and the base of the interior space of the housing (25).

11. Glasshouse according to one of Claims 1-3, in which the pre-stressing member comprises at least one coil spring (32) which extends between the slide (29) and the housing (25).

## Patentansprüche

1. Glashaus oder Gewächshaus mit einem Rahmengerüst, das Säulen (1), parallele Träger (2), die durch die Säulen (1) abstützend gehalten sind, Dachbalken (3), die zwischen zwei Dachrinnen (4) abstützend gehalten sind, die sich quer zwischen den Trägern (2) erstrecken, und eine Abschirmungsinstallation aufweist, wobei die Abschirmungsinstallation profilierte Abschirmungsabschnitte (8), Abschirmungstuchbahnen (40), die jeweils mit einem Ende an einem Träger (2) und mit dem anderen Ende an einem profilierten Abschirmungsabschnitt (8) befestigt sind, Gleitelemente (11) und Antriebsbauteile (9) aufweist, wobei die Antriebsbauteile (9) mit Hilfe eines Gleitelements (11) an einem profilierten Abschirmungsabschnitt (8) befestigt sind, um die Abschirmungstuchbahnen (40) zwischen einer geschlossenen Position, in der der Raum zwischen jedem Paar von Trägern (2) geschlossen ist, und einer offenen Position zu bewegen, wobei die Gleitelemente (11) jeweils ein Federbauteil (14) aufweisen, um zu bewirken, dass jedes Gleitelement (11) unter Federvorspannung mit dem zugehörigen Antriebsbauteil (9) eingreift, um eine vorbestimmte Rutschkraft zwischen Gleitelement (11) und Antriebsbauteil (9) zu bewirken, **dadurch gekennzeichnet, dass** zumindest ein profilierter Abschirmungsabschnitt (8) bezüglich der Gleitelemente (11) in Längsrichtung der Antriebsbauteile (9) verlagerbar ist, dass eine Vorspannungseinrichtung (32) vorgesehen ist, um den profilierten Abschirmungsabschnitt (8) in einer vorbestimmten Position bezüglich der Gleitelemente (11) mit einer Vorspannung zu beaufschlagen, und dass die Vorspannungseinrichtung (32) eine Vorspannungskraft bewirkt, die geringer ist als die Rutschkraft.

2. Glashaus nach Anspruch 1, bei dem der profilierte Abschirmungsabschnitt (8) in Richtung des Trägers (2) vorgespannt ist, gegen den der profilierte Abschirmungsabschnitt (8) in der geschlossenen Position der zugehörigen Abschirmungstuchbahn (40) anliegt.

3. Glashaus nach Anspruch 1 oder 2, bei dem der profilierte Abschirmungsabschnitt (8) mit einem Gleitelement (11) so verbunden ist, dass er um eine Achse rotieren kann, die quer zu dem profilierten Abschirmungsabschnitt (8) und den Antriebsbauteilen (9) verläuft.

4. Glashaus nach einem der vorhergehenden Ansprüche, bei dem die Vorspannungseinrichtung (32) mindestens eine Blattfeder (29) aufweist.

5. Glashaus nach Anspruch 4, bei dem die Vorspannungseinrichtung (32) einen Satz von zumindest zwei Blattfedern (29) aufweist.

6. Glashaus nach einem der vorhergehenden Ansprüche, bei dem der profilierte Abschirmungsabschnitt (8) über zumindest eine Gleiteinrichtung (24) mit den Gleitelementen (11) verbunden ist.

7. Glashaus nach Anspruch 6, bei dem die Gleiteinrichtung (24) ein Gehäuse (25), das fest mit dem profilierten Abschirmungsabschnitt (8) oder dem Gleitelement (11) verbunden ist, und ein Gleitmittel (28) aufweist, das mit der anderen Komponente von dem profilierten Abschirmungsabschnitt (8) und dem Gleitelement (11) verbunden ist, wobei das Gehäuse (25) einen Raum (34) hat, in dem das Gleitmittel (28) gleiten kann.

8. Glashaus nach Anspruch 7, bei dem das Gehäuse zwei an beiden Seiten des Gleitmittels (28) angeordnete Lagerabstützungen (18) aufweist, wobei zwischen den Lagerabstützungen (18) und dem Gleitmittel (28) zumindest eine vorgespannte Blattfeder (29) vorgesehen ist.

9. Glashaus nach Anspruch 8, bei dem das Gleitmittel (28) bezüglich des Gehäuses (25) um eine Achse rotieren kann, die quer zu dem profilierten Abschirmungsabschnitt (8) und dem Antriebsbauteil (9) verläuft, und eine abstützende Fläche hat, die bezüglich dieser Achse zumindest teilweise zylindrisch ist, und die Lagerabstützungen (18) des Gehäuses (25) an beiden Seiten dieser Achse angeordnet sind, und zwar in einer solchen Weise, dass die abstützende Fläche unter Vorspannung gegen die Blattfeder (29) anliegt, und im Fall der Rotation des Gleitmittels bezüglich des Gehäuses die zumindest teilweise zylindrische, abstützende Fläche entlang der Blattfeder (19) gleitet.

10. Glashaus nach Anspruch 9, bei dem die zumindest teilweise zylindrische, abstützende Fläche durch eine Flanschkante (35) begrenzt ist, und zwar in einer solchen Weise, dass die Blattfeder (29) zwischen der Flanschkante (35) und der Basis des Innenraums des Gehäuses (25) gehalten ist.

11. Glashaus nach einem der Ansprüche 1-3, bei dem das Vorspannungsbauteil zumindest eine Schraubenfeder (32) aufweist, die sich zwischen dem Gleitmittel (29) und dem Gehäuse (25) erstreckt.

## Revendications

1. Abri vitré ou serre, comprenant un châssis composé de colonnes (1), de poutres parallèles (2) qui sont supportées par les colonnes (1), de chapiteaux (3) qui sont supportés, chacun, entre deux chéneaux (4) s'étendant transversalement à travers la poutre (2), et une installation d'écran, installation d'écran qui comprend des segments d'écran profilés (8), des toiles d'écran (40) qui sont fixées, chacune, en une extrémité, à une poutre (2) et, à l'autre extrémité, à un segment d'écran profilé (8), des éléments de coulissement (11) et des éléments d'entraînement (9), éléments d'entraînement (9) qui sont fixés, au moyen d'un élément de coulissement (11), à un segment d'écran profilé (8) pour déplacer les toiles d'écran (40) entre une position fermée, dans laquelle l'espace entre chaque paire de poutres (2) est obturé, et une position ouverte, éléments de coulissement (11) qui comprennent, chacun, un élément de ressort (14) destiné à faire venir chaque élément de coulissement (11), sous la précontrainte de ressort, en prise avec l'élément d'entraînement (9) associé, afin de créer une force de coulissement prédéterminée entre l'élément de coulissement (11) et l'élément d'entraînement (9), **caractérisé par le fait qu'**au moins un segment d'écran profilé (8) est déplaçable par rapport aux éléments de coulissement (11) dans la direction longitudinale des éléments d'entraînement (9), en ce qu'il est prévu un moyen de précontrainte (32) destiné à déplacer le segment d'écran profilé (8) en une position prédéterminée par rapport aux éléments de coulissement (11), et en ce que le moyen de précontrainte (32) fournit une force de précontrainte qui est inférieure à la force de coulissement.

2. Abri vitré selon la revendication 1, dans lequel le segment d'écran profilé (8) est précontraint dans la direction de la poutre (2) contre laquelle s'appuie ledit le segment d'écran profilé (8) en position fermée de la toile d'écran associée (40).

3. Abri vitré selon la revendication 1 ou 2, dans lequel le segment d'écran profilé (8) est connecté à un élément de coulissement (11) de sorte qu'il puisse tourner autour d'un axe s'étendant transversalement audit segment d'écran profilé (8) et aux éléments d'entraînement (9).

4. Abri vitré selon l'une des revendications précédentes, dans lequel le moyen de précontrainte (32) comprend au moins un ressort à lame (29).

5. Abri vitré selon la revendication 4, dans lequel le moyen de précontrainte (32) comprend un ensemble d'au moins deux ressorts à lame (29).

6. Abri vitré selon l'une des revendications précédentes, dans lequel le segment d'écran profilé (8) est connecté aux éléments de coulissement (11) par l'intermédiaire d'au moins un moyen de coulissement (24).

7. Abri vitré selon la revendication 6, dans lequel le moyen de coulissement (24) comprend un boîtier (25) qui est connecté de manière fixe au segment d'écran profilé (8) ou à l'élément de coulissement (11), et un coulisseau (28) qui est connecté à l'autre élément parmi le segment d'écran profilé (8) et l'élément de coulissement (11), boîtier qui (25) présente un espace (34) dans lequel peut coulisser le coulisseau (28).

8. Abri vitré selon la revendication 7, dans lequel le boîtier présente deux supports d'appui (18) qui sont situés de chaque côté du coulisseau (28), supports d'appui (18) et coulisseau (28) entre lesquels se trouve au moins un ressort à lame précontraint (29).

9. Abri vitré selon la revendication 8, dans lequel le coulisseau (28) peut tourner par rapport au boîtier (25) autour d'un axe s'étendant transversalement au segment d'écran profilé (8) et à l'élément d'entraînement (9) et présente une surface de support qui est au moins partiellement cylindrique par rapport à cet axe, et les supports d'appui (18) du boîtier (25) sont situés de chaque côté dudit axe, de sorte que la surface de support s'appuie, sous précontrainte, contre le ressort à lame (29), et qu'en cas de rotation du coulisseau par rapport au boîtier, la surface de support au moins partiellement cylindrique coulisse le long du ressort à lame (19).

10. Abri vitré selon la revendication 9, dans lequel la surface de support au moins partiellement cylindrique est délimitée par un bord à bride (35), de sorte que le ressort à lame (29) soit retenu entre ledit bord à bride (35) et la base de l'espace intérieur du boîtier (25).

11. Abri vitré selon l'une des revendications 1 à 3, dans lequel l'élément de précontrainte comprend au moins un ressort hélicoïdal (32) qui s'étend entre le coulisseau (29) et le boîtier (25).
